# EUROPEAN PATENT APPLICATION

(11) **EP 4 772 923 A1**
(43) Date of publication of application: **08.07.2026**
(21) Application number: 24867154.7
(22) Date of filing: 09.08.2024
(51) Int. Cl.: G02B 6/42

(54) **OPTICAL MODULE HEAT DISSIPATION DEVICE**

(30) Priority: 22.09.2023 CN 202311233650
(71) Applicant: ZTE CORPORATION, Shenzhen, Guangdong 518057 (CN)
(72) Inventor: JI, Shengtao, Shenzhen, Guangdong 518057 (CN); CUI, Pengcheng, Shenzhen, Guangdong 518057 (CN)
(74) Representative: Mozzi, Matteo
(86) International application number: PCT/CN2024/111194
(87) International publication number: WO 2025/060737

(57) **Abstract**

Embodiments of the present disclosure provide an optical module heat dissipation device. The optical module heat dissipation device comprises: an optical module comprising an upper shell and a lower shell, wherein the upper shell comprises a fixedly mounted fixed shell portion and an elastically mounted floating shell portion; and a radiator comprising a first radiator region and a second radiator region, wherein the first radiator region is in contact with the fixed shell portion, and the second radiator region is in contact with the floating shell portion, so as to dissipate heat from the optical module.

## Description

### Cross-Reference to Related Application

The present disclosure claims the priority of Chinese Patent Application CN202311233650.6, filed on September 22, 2023 and entitled "Optical Module Heat Dissipation Device", the disclosure of which is incorporated herein by reference in its entirety.

### Technical Field

Embodiments of the present disclosure relate to the technical field of heat dissipation for an optical communication device, and in particular, to an optical module heat dissipation device.

### Background

The increasing complexity and diversity of network requirements and the rapidly expanding network scale have driven an explosive growth in the overall bandwidth of optical networks. As a core component of optical network transmission, high-performance coherent optical modules are evolving towards higher power consumption, smaller form factors, and greater flexibility. However, with the continuous rise in power consumption, existing optical modules suffer from several limitations: internal components are rigidly mounted with heat dissipation devices and share a common shell for thermal management, leading to thermal crosstalk. Furthermore, due to manufacturing tolerances in components, circuit boards, and optical module shells, conventional designs require relatively thick Thermal interface materials (TIMs) to compensate for these gaps. This results in high thermal resistance and inefficient heat transfer. Consequently, internal components cannot be cooled in a targeted manner based on their specific characteristics, which adversely affects device performance. Therefore, thermal management has become a critical bottleneck limiting the reliable application of optical modules. Addressing the challenge of component-specific heat dissipation remains an urgent problem to be solved in current optical module technology.

### Summary

The embodiments of the present disclosure provide an optical module heat dissipation device, which may address the problem in the related art of how to achieve component-specific heat dissipation for components within an optical module.

According to an embodiment of the present disclosure, provided is an optical module heat dissipation device, including: an optical module including an upper shell and a lower shell, wherein the upper shell includes a fixed shell portion that is fixedly mounted and a floating shell portion that is elastically mounted; and a heat sink including a first heat sink region and a second heat sink region, wherein the first heat sink region is in contact with the fixed shell portion, and the second heat sink region is in contact with the floating shell portion, so as to dissipate heat of the optical module.

### Brief Description of the Drawings

Fig. 1 is an exploded schematic diagram of an optical module device in the related art;
Fig. 2 is an exploded schematic diagram of an optical module mounted on a board in the related art;
Fig. 3 is a schematic diagram of assembly of an optical module on a board in the related art;
Fig. 4 is an exploded schematic diagram of an optical module device according to an embodiment of the present disclosure;
Fig. 5 is an exploded schematic diagram of an optical module device according to another embodiment of the present disclosure;
Fig. 6 is an exploded schematic diagram of an optical module device according to a further embodiment of the present disclosure;
Fig. 7 is an exploded schematic diagram of a heat sink device according to an embodiment of the present disclosure;
Fig. 8 is an exploded schematic diagram of a heat sink device according to another embodiment of the present disclosure; and
Fig. 9 is a schematic diagram of assembly of a heat sink device and an optical module device according to an embodiment of the present disclosure.

### Detailed Description of the Embodiments

The embodiments of the present disclosure are described in detail with reference to the accompanying drawings and in conjunction with the embodiments.

It should be noted that the terms such as "first" and "second" in the description, claims, and accompanying drawings of the present disclosure are used to distinguish similar objects, and are not necessarily used to describe a specific sequence or order.

The embodiments of the present disclosure provide an optical module equipped with a fixed shell and a floating shell, and a heat sink device matching the optical module. The shell of the optical module includes a fixed shell portion and a floating shell portion, and the two shell portions may be interconnected or separated. The heat sink device matching the optical module includes a plurality of heat sink portions corresponding to the fixed shell and the floating shell, respectively. The fixed shell and the floating shell are respectively in connection with corresponding components requiring heat dissipation in the optical module. The respective components transmit heat to the fixed shell portion and the floating shell portion respectively (thermal interface materials may be filled between the respective components and the shell to reduce the interface thermal resistance), and then the heat is dissipated into the air by means of the heat sink portion matching the optical module. By means of a partitioned and targeted heat dissipation design, the problem of heat dissipation of bottleneck components inside the optical module is effectively solved. To facilitate understanding of the technical solutions provided in the embodiments of the present disclosure, detailed elaboration will be provided below in conjunction with embodiments of specific scenarios.

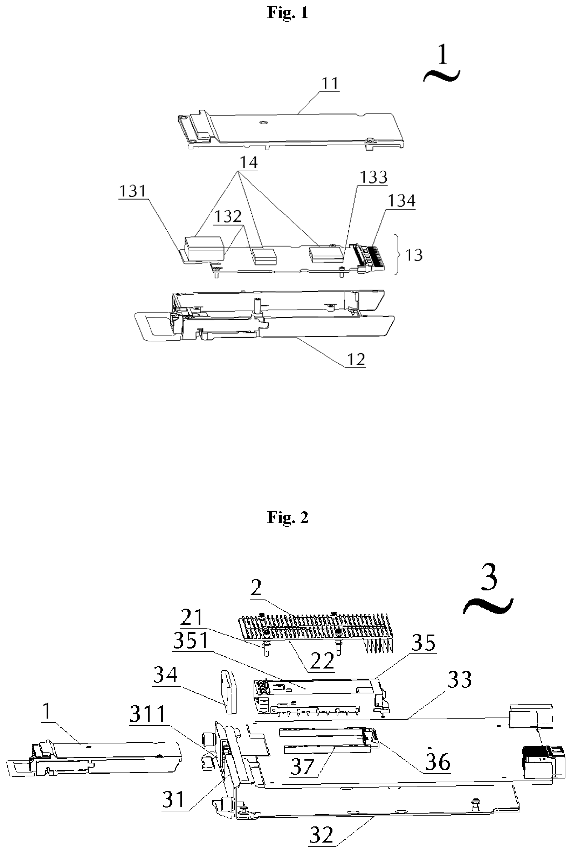

Fig. 1 is an exploded schematic diagram of an optical module heat dissipation device in the related art. As shown in Fig. 1, the optical module heat dissipation device includes: an optical module 1, a heat sink 2, and a communication device board 3.

The optical module 1 includes an upper shell 11, a lower shell 12, a circuit board assembly 13, and thermal interface materials 14.

The circuit board assembly 13 is configured to carry the circuit of the optical module 1 and to provide functions such as signal links. The circuit board assembly 13 includes a Printed Circuit Board (PCB) 131, components 132 and 133, as well as other components (not shown in the figures), and a connector 134. The circuit board assembly 13 is fastened on the lower shell 12 or suspended from the upper shell 11 (in the embodiments described herein, the configuration where the circuit board assembly 13 is fixed on the lower shell 12 is taken as an example). The components 132 and 133 are connected to the upper shell 11 of the optical module 1 by means of thermal interface materials 14. (Note: Whether the connection is to the upper shell 11 or the lower shell 12 is determined based on whether the components 132 and 133 are placed on the A-side or the B-side of the PCB; in the embodiments described herein, the placement of the components 132 and 133 on the A-side of the PCB is taken as an example). The upper shell 11 is fixed to the lower shell 12 to encapsulate the optical module 1.

The heat sink 2 is fixed to a guide rail 37 of the communication device board 3 using one or more spring screws 21 (or fixed on a cage 35 of the communication device board 3 by means of a snap), and the heat sink 2 has a floating capability.

Fig. 2 is an exploded schematic diagram of an optical module mounted on a board in the related art. As shown in Fig. 2, the communication device board 3 includes a front panel 31, a tray 32, a board PCB 33, a connector housing 34, a cage 35, a board optical connector 36, a guide rail 37, and other components.

The front panel 31 is provided with an opening 311, and the connector housing 34 is mounted within the opening 311.

The board optical connector 36 is soldered to the board PCB 33. After a rear end of the cage 35 is matched with the board optical connector 36, the cage 35 is inserted onto the board PCB 33. The board PCB 33 is fixed to the front panel 31 and the tray 32 by means of screws or similar fasteners. Meanwhile, during the board mounting process, it is required to ensure that a front end of the cage 35 matches with the connector housing 34.

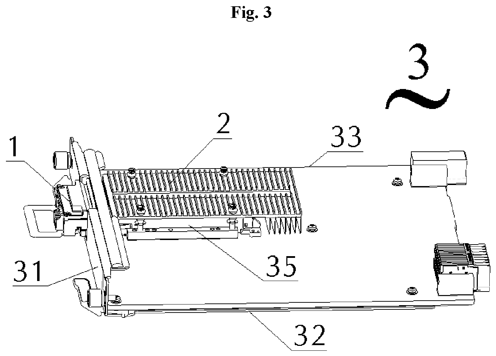

Fig. 3 is a schematic diagram of assembly of an optical module on a board in the related art. As shown in Fig. 3, the assembly and heat dissipation principle of the optical module device includes: the optical module 1 is inserted through the opening 311 of the board and passes through the connector housing 34 into the cage 35; the connector 134 of the optical module 1 is inserted onto the board optical connector 36, thereby establishing a signal path between the optical module 1 and the communication device board 3. A base plate 22 of the heat sink 2 is in hard contact with the upper shell 11 of the optical module 1 through an opening 351 of the cage 35, or is in contact with the upper shell 11 of the optical module 1 via thermal conductive materials. Components such as a component 132 and a component 133 inside the optical module 1 transmit heat to the upper shell 11, which then transfers the heat to the heat sink 2. This establishes a heat conduction path from the internal components to the external heat sink, ultimately dissipating the heat into the air, representing a conventional form of an optical module heat dissipation device.

In this embodiment, most of the components inside the optical module 1, such as the component 132 and the component 133, are fixed on the board PCB 33 and share the upper shell 11 for heat transfer. On one hand, since the upper shell 11 is a good thermal conductor, this leads to thermal crosstalk (interconnected heat influence) among the component 132, the component 133, and other components. On the other hand, since the component 132, the component 133, and other components are mostly in a fixed configuration and share the upper shell 11, it is necessary to fill with tolerance-compensating thermal interface materials, resulting in high thermal resistance and difficult heat transfer.

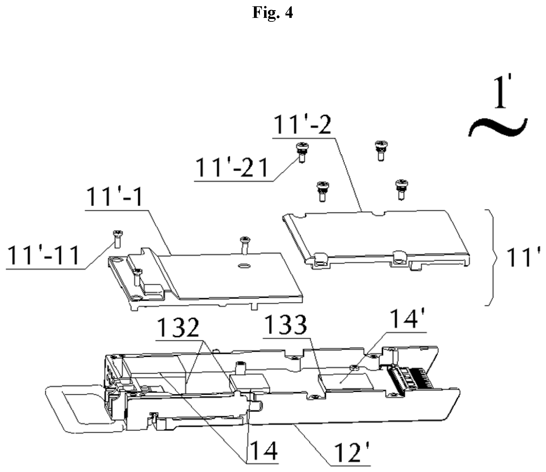

Based on the problem that targeted heat dissipation cannot be achieved for conventional optical modules, this embodiment provides an optical module heat dissipation device equipped with a fixed shell and a floating shell, along with a matching heat sink, based on the aforementioned conventional optical module heat dissipation device. The assembly on the board is similar to that of a conventional optical module. As shown in Fig. 4, Fig. 6, and Fig. 7, the optical module 1' includes an upper shell 11' and a lower shell 12'. The upper shell 11' includes a fixed shell portion 11'-1 and a floating shell portion 11'-2. The fixed shell portion 11'-1 is fixedly (rigidly) mounted with the optical module and is relatively immovable. The floating shell portion 11'-2 is elastically mounted with the optical module, capable of floating in a direction perpendicular to the heat sink base plate, and also having a certain range of movement in the planar direction. The fixed shell portion 11'-1 and the floating shell portion 11'-2 may be interconnected with each other or separated from each other.

Fig. 4 is an exploded schematic diagram of an optical module device according to an embodiment of the present disclosure. As shown in Fig. 4, the fixed shell portion 11'-1 and the floating shell portion 11'-2 may be in a separated form. The lower shell 12' may be identical to the lower shell 12 of the conventional optical module 1, or may be configured with a fixed/floating scheme (which is not specifically described in the embodiments of this disclosure). A circuit board assembly 13 is fixed inside the lower shell 12'. The fixed shell portion 11'-1 of the upper shell 11' is fixed on the lower shell 12' by means of limiting screws 11'-11, and the floating shell portion 11'-2 is fixed on the lower shell 12' by means of spring screws 11'-21, thereby achieving a floating assembly of the floating shell portion 11'-2 with the lower shell 12'.

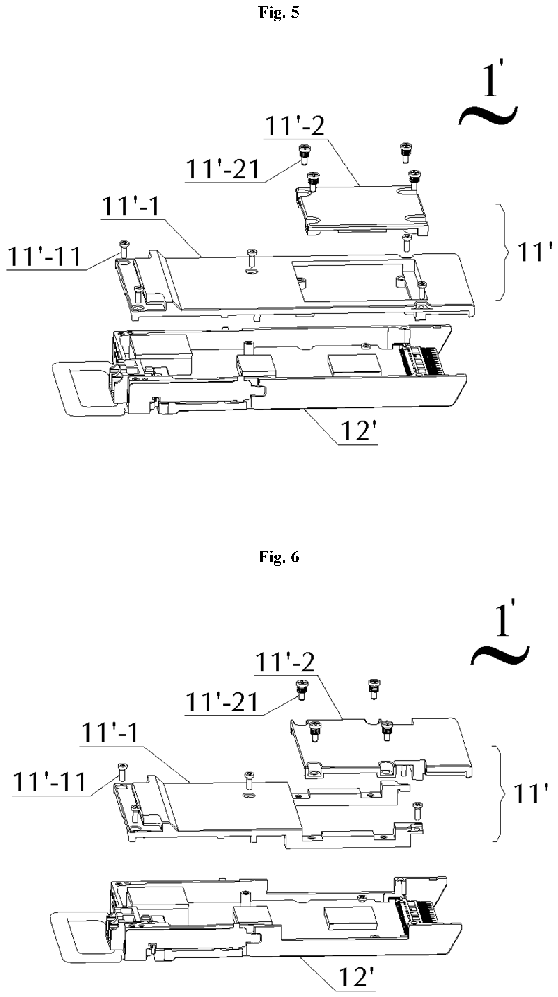

Fig. 5 is an exploded schematic diagram of an optical module device according to another embodiment of the present disclosure, and Fig. 6 is an exploded schematic diagram of an optical module device according to a further embodiment of the present disclosure. As shown in Fig. 5 or Fig. 6, a mounting space is reserved on the fixed shell portion 11'-1 for the floating shell portion 11'-2. Specifically, the mounting space may be an opening provided in the upper shell 11' (as shown in Fig. 5); in this case, the upper shell 11' provided with the opening serves as the fixed shell portion 11'-1, and the floating shell portion 11'-2 is mounted to the fixed shell portion 11'-1 within the opening of the fixed shell portion 11'-1. Alternatively, the mounting space may be configured as shown in Fig. 6, where the upper shell 11' is divided into left and right parts, and the right part is mounted to a protruding structure of the left part. Specifically, the floating shell portion 11'-2 is mounted to the fixed shell portion 11'-1 by means of spring screws 11'-21 or the like, forming an interconnected upper shell 11'. The upper shell 11' is fixed to the lower shell 12' by means of limiting screws 11'-11 of the fixed shell portion 11'-1, thereby achieving the encapsulation of the optical module 1'.

Thermal interface materials are provided between the components in the circuit board assembly 13 and the upper shell 11'. Components such as the component 132 are connected to the fixed shell portion 11'-1 via tolerance-compensating thermal interface materials 14, sharing the fixed shell portion 11'-1 to achieve heat transfer from the components to the upper shell. Components such as the component 133 are connected to the floating shell portion 11'-2 via ultra-thin low-thermal-resistance thermal interface materials 14', using the floating shell portion 11'-2 to achieve heat transfer from the components to the upper shell. The floating shell portion employs ultra-thin low-thermal-resistance thermal conductive materials. Compared to tolerance-compensating thermal conductive materials, the thermal resistance of the ultra-thin low-thermal-resistance thermal conductive materials can be reduced by approximately 60%. Consequently, the material thermal resistance is significantly decreased, allowing heat from the components to be transferred to the upper shell more easily.

The heat sink 2' matching the fixed/floating upper shell 11' includes a first heat sink portion 2'-1 and a second heat sink portion 2'-2. In this disclosure, the first heat sink portion 2'-1 is defined to match and contact the fixed shell portion 11'-1 for heat transfer, and the second heat sink portion 2'-2 is defined to match and contact the floating shell portion 11'-2 for heat transfer.

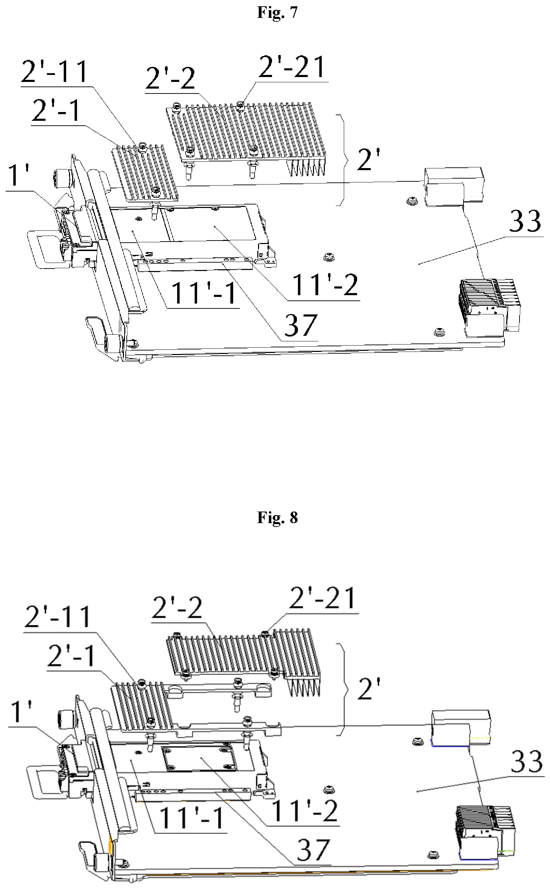

Similar to the upper shell 11' of the optical module, the first heat sink portion 2'-1 and the second heat sink portion 2'-2 of the heat sink 2' may also be interconnected or separated to cooperate with the design of the upper shell 11' to achieve coordinated heat dissipation. Fig. 7 is an exploded schematic diagram of a heat sink device according to an embodiment of the present disclosure. As shown in Fig. 7, the first heat sink portion 2'-1 and the second heat sink portion 2'-2 of the heat sink 2' are in a separated form. The first heat sink portion 2'-1 and the second heat sink portion 2'-2 are respectively mounted to the guide rail 37 by means of spring screws 2'-11 and 2'-21, thereby achieving the mounting of the optical module heat sink.

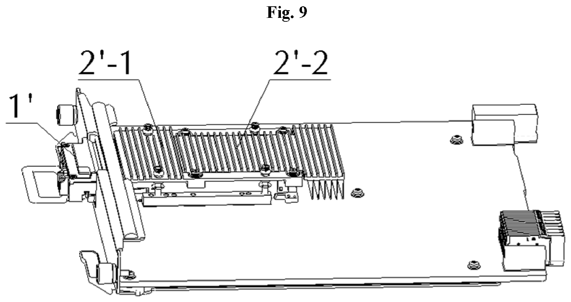

Fig. 8 is an exploded schematic diagram of a heat sink device according to another embodiment of the present disclosure. As shown in Fig. 8, the first heat sink portion 2'-1 and the second heat sink portion 2'-2 of the heat sink 2' are in an interconnected form. Besides its own heat dissipation functional area, the first heat sink portion 2'-1 reserves a space for mounting the second heat sink portion 2'-2. The second heat sink portion 2'-2 is mounted onto the first heat sink portion 2'-1 by means of spring screws 2'-21 or the like, forming an interconnected heat sink 2'. The heat sink 2' is fixed to the guide rail 37 by means of spring screws 2'-11 of the first heat sink portion 2'-1, thereby achieving the mounting of the optical module heat sink. The mounting effect of the heat sink is shown in Fig. 9.

The two types of heat sink devices described above can be arbitrarily matched and applied with the three types of optical module devices described above.

Through the aforementioned embodiments of the present disclosure, since the optical module is equipped with a floating shell portion which contacts the second heat sink portion, heat from internal components of the optical module can be transferred to the floating shell portion and then dissipated into the air via the heat sink contacting the floating shell portion. Meanwhile, since the floating shell portion is elastically mounted, it achieves separation from the shells corresponding to other components, reducing thermal crosstalk influence. Furthermore, the elastic contact between the shell and the components allows for the filling of ultra-thin low-thermal-resistance thermal interface materials, enabling heat from the components to be dissipated outward in a timely manner, thereby ensuring component performance. Therefore, this solves the problem in the related art regarding how to provide targeted heat dissipation for components within an optical module, achieving the effect of targeted heat dissipation.

The design of the floating shell and the floating heat sink enables the optical module to achieve high-efficiency heat dissipation within a standard package size without the need for additional extended heat dissipation devices. Compared to other heat dissipation devices with equivalent heat dissipation effects, the optical module heat dissipation device in the embodiments of the present disclosure occupies less space.

In the present embodiment, the assembly and heat dissipation principle of the optical module device includes: the optical module 1' is mounted along the opening 311 of the board and inserted into the cage 35 through the connector housing 34; and the fixed shell portion 11'-1 of the optical module 1' matches and is in contact with the first heat sink region 2'-1 of the heat sink 2'; and the floating shell portion 11'-2 of the optical module 1' matches and is in contact with the second heat sink region 2'-2 of the heat sink 2'. The heat from components such as the component 132 is transferred to the fixed shell portion 11'-1, and then is transferred to the first heat sink region 2'-1 and then is dissipated into the air; the heat from components such as the component 133 is transferred to the floating shell portion 11'-2, and then is transferred to the second heat sink region 2'-2 and then is dissipated into the air.

In an embodiment, the floating form of the floating shell portion 11'-2 is not limited to the above two forms, and floating may also be achieved by other forms such as spring clip engagements and flexible connections.

In an embodiment, the floating solution of the shell and the heat sink further includes, but is not limited to, the following:
(1) A floating portion of a shell of an optical module can be in the form of a snap-fitting manner, a limit fixing manner, etc.; and a spring leaf, a flexible thermally-conductive pad, etc. are provided in an abutting area to achieve floating; a sealing elastic structural member can also be used to achieve floating, while having the effect of sealing the upper shell.
(2) The heat sink matching the shell of the optical module can also include a fixed bracket, with the first heat sink region and the second heat sink region fixed onto the bracket, achieving the purpose of matching the fixed and floating shells of the optical module.
(3) The fixed shell portion may also not be used for heat transfer of components, and is mainly used for supporting and mounting the floating shell portion.

In the embodiments of the present disclosure, by means of fixed and floating shells and the heat sink device matching the fixed and floating shells, based on differences in power consumption, thermal sensitivity and the like of components inside the optical module, a targeted heat dissipation design is provided, so as to eliminate the influence of a thermal crosstalk between the components. By means of detailed analysis of the optical module, the heat dissipation efficiency of the optical module device in the present disclosure is significantly improved, and the heat dissipation problem of the bottleneck component inside the optical module with high power consumption can be effectively solved, thereby greatly improving the reliability of the optical module.

The content above only relates to exemplary embodiments of the present disclosure, and is not intended to limit the present disclosure. For those skilled in the art, the present disclosure may have various modifications and changes. Any modifications, equivalent replacements, and improvements made within the principle of the present disclosure shall all fall within the scope of protection of the present disclosure.

## Claims

1. An optical module heat dissipation device, comprising:
an optical module (1'), comprising an upper shell (11') and a lower shell (12'), wherein the upper shell (11') comprises: a fixed shell portion (11'-1) that is fixedly mounted and a floating shell portion (11'-2) that is elastically mounted; and
a heat sink (2'), comprising a first heat sink region (2'-1) and a second heat sink region (2'-2), wherein the first heat sink region (2'-1) is in contact with the fixed shell portion (11'-1), and the second heat sink region (2'-2) is in contact with the floating shell portion (11'-2), so as to dissipate heat of the optical module (1').

2. The optical module heat dissipation device according to claim 1, wherein the fixed shell portion (11'-1) is fixedly mounted on the lower shell (12'), and the floating shell portion (11'-2) is elastically mounted on the lower shell (12').

3. The optical module heat dissipation device according to claim 1, wherein the fixed shell portion (11'-1) is fixedly mounted on the lower shell (12'), and the floating shell portion (11'-2) is elastically mounted on the fixed shell portion (11'-1) within a mounting space provided on the fixed shell portion (11'-1).

4. The optical module heat dissipation device according to claim 1, wherein the first heat sink region (2'-1) and the second heat sink region (2'-2) are elastically mounted on a board (3) of the optical module heat dissipation device.

5. The optical module heat dissipation device according to claim 1, wherein the first heat sink region (2'-1) is elastically mounted on a board (3') of the optical module heat dissipation device, and the second heat sink region (2'-2) is elastically mounted on the first heat sink region (2'-1) within a mounting space provided on the first heat sink region (2'-1).

6. The optical module heat dissipation device according to claim 1, wherein the lower shell (12') is connected to the upper shell (11'), and a circuit board assembly (13) is mounted within a space enclosed between the lower shell (12') and the upper shell (11').

7. The optical module heat dissipation device according to claim 6, wherein thermal interface materials are provided between one or more components in the circuit board assembly (13) and the upper shell (11').

8. The optical module heat dissipation device according to claim 6, wherein
thermal interface materials are provided between one or more first components, corresponding to a position of the fixed shell portion (11'-1), of the circuit board assembly (13) and the fixed shell portion (11'-1); and
thermal interface materials are provided between one or more second components, corresponding to a position of the floating shell portion (11'-2), of the circuit board assembly (13) and the floating shell portion (11'-2).

9. The optical module heat dissipation device according to claim 1, wherein the lower shell (12') comprises a floating portion and a fixed portion, and the floating portion and the fixed portion are separated from each other or interconnected with each other.

10. The optical module heat dissipation device according to claim 1, wherein the floating shell portion (11'-2) is elastically mounted through one of: one or more spring screws, spring clip engagement, or flexible connection.
